# EUROPÄISCHE PATENTSCHRIFT

(11) **EP 3 735 154 B1**
(45) Veröffentlichungstag und Bekanntmachung des Hinweises auf die Patenterteilung: **13.04.2022**
(21) Anmeldenummer: 19700129.0
(22) Anmeldetag: 03.01.2019
(51) Int. Cl.: A47B 96/20

(54) **ANORDNUNG EINES MÖBELBESCHLAGS UND EINES VON DIESEM GEHALTENEN GLASELEMENTS UND BETRIEBSVERFAHREN FÜR EINE DERARTIGE ANORDNUNG**
ARRANGEMENT OF A FURNITURE FITTING AND A GLASS ELEMENT HELD BY SAME AND OPERATING METHOD FOR AN ARRANGEMENT OF THIS KIND
ENSEMBLE CONSTITUÉ D'UNE FERRURE DE MEUBLE ET D'UN ÉLÉMENT EN VERRE MAINTENU PAR CELLE-CI ET PROCÉDÉ DE FONCTIONNEMENT D'UN TEL ENSEMBLE

(30) Priorität: 05.01.2018 DE 102018100207
(43) Veröffentlichungstag der Anmeldung: 11.11.2020
(73) Patentinhaber: Hettich Holding GmbH & Co. oHG, 32278 Kirchlengern (DE)
(72) Erfinder: ANDSCHUS, Stefan, 32312 Lübbecke (DE)
(74) Vertreter: Kleine, Hubertus
(86) Internationale Anmeldenummer: PCT/EP2019/050091
(87) Internationale Veröffentlichungsnummer: WO 2019/134937

(56) Entgegenhaltungen:
- EP-A1- 3 176 690
- AT-U1- 9 417
- US-A1- 2007 035 540
- US-A1- 2008 000 399
- US-A1- 2015 362 768

## Beschreibung

Die Erfindung betrifft eine Anordnung eines Möbelbeschlags und eines über den Möbelbeschlag geführten und an einem nach vorne offenen Möbelkorpus montierten beweglichen Möbelteils, wobei von dem Möbelbeschlag mittelbar oder unmittelbar ein Glaselement gehaltenen wird, das Teil des beweglichen Möbelteils ist. Das Glaselement umfasst ein Verbundglaselement, das mindestens ein Deckelement aus Glas und ein großflächig mittelbar oder unmittelbar damit verbundenes Tragelement aufweist, wobei an oder in dem Tragelement Befestigungselemente zur Verbindung des Glaselements mit dem Möbelbeschlag angeordnet sind und wobei das Tragelement hinterschnittene Ausnehmungen aufweist, in denen die Befestigungselemente angeordnet sind. Die Erfindung betrifft weiterhin ein Betriebsverfahren für eine Anordnung eines Möbelbeschlags und eines von dem Möbelbeschlag mittelbar oder unmittelbar gehaltenen Glaselements.

Möbel, insbesondere Küchenmöbel oder Wohnmöbel wie Unterschränke oder Hängeschränke, weisen in der Regel einen nach vorne offenen Möbelkorpus auf, an dem über Beschläge geführte bewegbare Möbelteile montiert sind. Die Beschläge können dabei z.B. Schiebebeschläge wie Auszugsführungen sein, die Schubkästen führen, Scharniere, die um eine vertikale Achse schwenkbare Türen führen, oder Klappenbeschläge, die um eine horizontale Achse schwenkbare Klappen führen.

Während die Möbelkorpusse in der Regel aus einem leicht bearbeitbaren Holz oder Holzwerkstoff gefertigt sind, werden für die von den Möbelbeschlägen gehaltenen Möbelteile, die häufig eine Front des Möbelkorpus oder einen Teil einer Front des Möbelkorpus bilden, aus Designgründen auch die eingangs genannten Glaselemente verwendet.

Unter einem Glaselement ist im Rahmen der Anmeldung ein Element zu verstehen, das zumindest eine in der Regel nach außen weisende und für den Benutzer sichtbare Glasscheibe aufweist. Beim Einsatz eines Glaselements als bewegbarem, von dem Beschlag gehaltenem Möbelteil besteht eine technische Herausforderung darin, die Glasscheibe des Glaselements möglichst verdeckt und nicht sichtbar sicher mit dem Beschlag zu verbinden. Dazu sind bspw. Glaselemente bekannt, bei denen die Glasscheibe in einen Rahmen eingesetzt ist, wobei der Rahmen mit dem Beschlag verbunden ist. Ein solcher Rahmen lässt die Glasscheibe jedoch weniger elegant wirken.

Die Druckschrift DE 20 2006 007 201 U1 beschreibt ein Verbundglaselement für Fassaden mit zwei miteinander verbundenen Glasscheiben, von denen eine durchgängig ist, wohingegen in der anderen ggf. hinterschnittene Durchgangsbohrungen vorgesehen sind, in die ein Verbindungselement eingesetzt ist, das bevorzugt transparent ist.

Die Druckschrift AT 009 417 U1 beschreibt ebenfalls einen Möbelbeschlag, der ein Verbundglaselement führt. Der Verbund umfasst dabei eine dünne Platte, die mit dem Beschlag verbunden ist, z.B. über Schrauben mit versenkten Köpfen. Auf diese Platte ist eine Designplatte, z.B. aus Glas oder Stein, aufgebracht. Die Schrift macht keine Aussagen zu der sich ergebenden Optik.

Die Schrift US 2007/035540 A1 offenbart einen Tisch, dessen Tischplatte als interakiver Bildschirm ausgebildet ist. Die Tischplatte wird von einer durchscheinenden Platte gebildet, die im Außenbereich auf einem Rahmen aufliegt. Der Rahmen wiederum ist mit in Ausnehmungen versenkten Schrauben an einem Chassis befestigt. Köpfe der Schrauben weisen dabei einen ausreichenden Abstand von der durchscheinenden Platte auf, wodurch sie durch die Platte nicht zu sehen sind. Bei Möbelbeschlägen für ein bewegbares Möbelteil steht Platz für einen derartigen Abstand in der Regel nicht zur Verfügung.

Eine weitere Befestigungsart für eine Glasscheibe als bewegbares Möbelteil ist aus der Druckschrift EP 2 042 677 B1 bekannt. Diese Schrift beschreibt eine Frontblende für eine Schublade, wobei als Verbindungselemente an einer Schubladenzarge angeordnete Adapterplatten vorgesehen sind, auf die die Glasscheibe aufgeklebt ist. Die Adapterplatten sind dabei in ihrer Fläche an ein sich an unten verbreitendes Profil der Schubladenzarge angepasst, wodurch eine ausreichend große Klebefläche erreicht wird. Bei einer Glasscheibe, die eine Schubladenfront bildet, erfolgt die Verklebung beidseitig mit jeweils einer Adapterplatte im Bereich jeder Seitenzarge. Trotz der beidseitigen Verklebung wirken in manchen Benutzungssituationen so große Kräfte auf die Klebeflächen, dass die Klebung unter Umständen nicht die erforderliche Lebenszeit des Möbels erreicht.

Bei Verwendung eines Glaselements als Tür oder Klappe erfolgt eine Befestigung dagegen in der Regel entlang nur einer Seitenkante des Glaselements, wodurch ebenfalls große Kräfte auf eine Klebeverbindung zwischen dem Beschlag und dem Glaselement wirken würden. Dieses macht eine Klebeverbindung zwischen dem Beschlag und dem Glaselement zumindest für großflächigere Glaselemente ungeeignet.

Es ist eine Aufgabe der vorliegenden Erfindung, eine Anordnung aus einem Möbelbeschlag und einem Glaselement zu schaffen, bei dem eine sichere und verdeckte Verbindung erzielt wird.

Diese Aufgabe wird gelöst durch eine eingangs genannte Anordnung aus einem Möbelbeschlag und einem Glaselement gemäß den Merkmalen des unabhängigen Anspruchs. Vorteilhafte Weiterbildungen und Ausgestaltungen sind Gegenstand von abhängigen Ansprüchen. Weiter wird diese Aufgabe durch ein Betriebsverfahren für eine Anordnung aus einem Möbelbeschlag und einem Glaselement gelöst.

Eine erfindungsgemäße Anordnung der eingangs genannten Art zeichnet sich dadurch aus, dass das Glaselement mindestens eine Abdeckschicht aufweist, die zumindest in dem Bereich der Ausnehmungen des Tragelements nicht-transparent ist und die sich zwischen dem Tragelement und dem Deckelement befindet.

Die Ausbildung des Glaselements als Verbundglaselement ermöglicht es, das Deckelement aus Glas (Glasscheibe) großflächig mit einem Tragelement zu verbinden, wobei in dem Tragelement Montageelemente, bspw. Gewindeeinsätze, zur Verbindung mit dem Möbelbeschlag angeordnet und befestigt sind. Das Tragelement kann ebenfalls aus Glas, der leichteren Bearbeitbarkeit halber aber auch aus einem transparenten oder zumindest durchscheinenden Kunststoff, z.B. Polycarbonat oder Acrylglas, bestehen. Es kann ein- oder mehrteilig und auch ein- oder mehrschichtig aufgebaut sein. In dem Tragelement sind in die Ausnehmungen die Befestigungselemente, insbesondere Gewindeeinsätze, eingesetzt, bspw. verklebt oder eingelassen. Die Ausnehmungen, in die die Befestigungselemente eingesetzt sind, sind in der Tragscheibe hinterschnitten ausgebildet, sodass Kräfte nicht nur über eine Klebeschicht, sondern über eine formflüssige Verbindung in das Tragelement eingeleitet werden können.

Sowohl für die Befestigungselemente selbst, als auch für die eingreifenden Montagemittel wie Schrauben wird wegen der großen auftretenden Kräfte im Möbelbereich in der Regel ein nicht-transparentes Material wie z.B. ein Metall oder Kunststoff verwendet, das erfindungsgemäß durch die Abdeckschicht vorteilhaft verdeckt wird. Erst dadurch ist die beschriebene Befestigungsart des Verbundglaselements im Möbelbereich einsetzbar. Neben dem Verbindungsbereich können auch andere Bereiche des Verbundglaselements nicht-transparent, also undurchsichtig, ausgebildet sein, um z.B. Beschläge oder Zargen o.ä. zu verdecken. Transparente oder teil-transparente Bereiche ermöglichen dagegen einen Einblick in den Möbelkorpus, beispielsweise um den Inhalt erkennen zu können.

Die Anordnung der Abdeckschicht zwischen dem Deckelement und dem Tragelement schützt die Abdeckschicht vor mechanischen (z.B. Abrieb) und/oder chemischen Einflüssen (z.B. umweltbedingten Einflüssen oder Einflüssen durch Reinigungsmittel).

In einer vorteilhaften Ausgestaltung der Anordnung ist die mindestens eine Abdeckschicht zumindest abschnittsweise durch eine Zwischenfolie oder durch eine Lackierung gebildet. Die mindestens eine Abdeckschicht kann transparente Bereiche aufweisen. Sie kann vollflächig über die Fläche des Glaselements ausgebildet sein. Alternativ kann sich eine Abdeckschicht auch nur teilweise über die Fläche des Glaselements erstrecken, wobei auch mehrere, nicht miteinander verbundenen Abschnitte der Abdeckschicht vorgesehen sein können. Verschiedene Abdeckschichten können auch ganz oder teilweise übereinander angeordnet sein.

In einer weiteren vorteilhaften Ausgestaltung der Anordnung weist die mindestens eine Abdeckschicht zumindest abschnittsweise eine elektrooptisch aktive Schicht auf. Diese kann beispielsweise eine Flüssigkristallschicht und/oder ein elektrochromes Material umfassen. Bevorzugt ist die elektrooptisch aktive Schicht zwischen zwei Elektrodenschichten angeordnet, die über Zuleitungen und/oder Kontaktstifte kontaktierbar sind.

Eine elektrooptisch aktive Schicht stellt im Rahmen der Anmeldung eine Schicht dar, die angesteuert durch eine elektrische Spannung ihren Transparenzgrad und/oder ihre Farbe ändert. Diese Schicht kann so angesteuert sein, dass ein Einblick in den Möbelkorpus zeitweise gegeben ist. Es kann beispielsweise vorgesehen sein, dass der Verbindungsbereich dauerhaft nicht-transparent abgedeckt wird, wohingegen der außerhalb des Verbindungsbereichs liegende Teil der Abdeckschicht die elektrooptisch aktive Schicht aufweist. In einem Zustand der elektrooptisch aktiven Schicht wird diese so angesteuert, dass ein einheitliches Erscheinungsbild der Front des beweglichen Möbelteils erhalten wird.

Bei Bedarf kann insbesondere der Bereich, in dem keine Verbindungselemente oder Komponenten des beweglichen Möbelteils angeordnet sind, durch Anlegen einer entsprechenden Spannung transparent geschaltet werden, bspw. um Einblick in den Möbelkorpus zu erhalten, auch ohne das bewegbare Möbelteil, bspw. die Tür oder Klappe, öffnen zu müssen. So kann durch die schaltbare elektrooptisch aktive Schicht ein Kompromiss zwischen einer großflächigen und damit soliden Klebeverbindung und der Möglichkeit, Einblick in das Innere des Möbelkorpus zu erhalten, erzielt werden.

In einer weiteren vorteilhaften Ausgestaltung weist die Anordnung eine Steuereinrichtung zur Ansteuerung der elektrooptisch aktiven Schicht auf, die mindestens eine Schnittstelle zum Empfangen von Anweisungen umfasst, die einen Zustand der elektrooptisch aktiven Schicht betreffen. Bevorzugt ist die Schnittstelle eine Funkschnittstelle und/oder eine akustische Schnittstelle ist. Über eine derartige Schnittstelle können entsprechende Kommandos, die den Zustand der elektrooptischen Schicht betreffen, empfangen werden und so der Zustand, insbesondere ihr Transparenzgrad, auf für den Nutzer möglichst bequeme Art eingestellt werden.

Ein erfindungsgemäßes Möbel weist einen Möbelkorpus und eine derartige Anordnung eines Möbelbeschlags und eines Glaselements auf. Insbesondere ist der Beschlag ein Bewegungsbeschlag und das Glaselement bildet eine Frontblende des Möbels. Es ergeben sich die im Zusammenhang mit der Anordnung geschilderten Vorteile.

In einem erfindungsgemäßen Verfahren zum Betreiben einer Anordnung eines Möbelbeschlags, eines Glaselements mit elektrooptisch aktiver Schicht und einer Steuereinrichtung wird eine Anweisung über die Schnittstelle von der Steuereinrichtung empfangen und ausgewertet und es wird die elektrooptisch aktive Schicht abhängig von der ausgewerteten Anweisung angesteuert. Es ergeben sich so die im Zusammenhang mit der entsprechenden Anordnung geschilderten Vorteile und Möglichkeiten.

Die Erfindung wird nachfolgend anhand von Ausführungsbeispielen mit Hilfe von Figuren näher erläutert. Die Figuren zeigen:
- Figur 1a, 1b: jeweils eine isometrische Ansicht eines Möbelkorpus mit einer Klappenanordnung in einer geschlossenen und einer teilgeöffneten Stellung der Klappenanordnung;
- Figur 2a, 2b: jeweils eine Seitenansicht eines Teils des Beschlags und eines Glaselements der Klappenanordnung in getrenntem und verbundenem Zustand;
- Figur 3: eine schematische Darstellung eines Aufbaus eines Glaselements;
- Figur 4: eine isometrische Ansicht eines Ausschnitts eines Schubkastens mit einem Glaselement;
- Figur 5: eine Seitenansicht eines Beschlags und eines Glaselements des Schubkastens der Figur 4; und
- Figur 6a - 6f: verschiedene Draufsichten auf eine Abdeckschicht eines Glaselements.

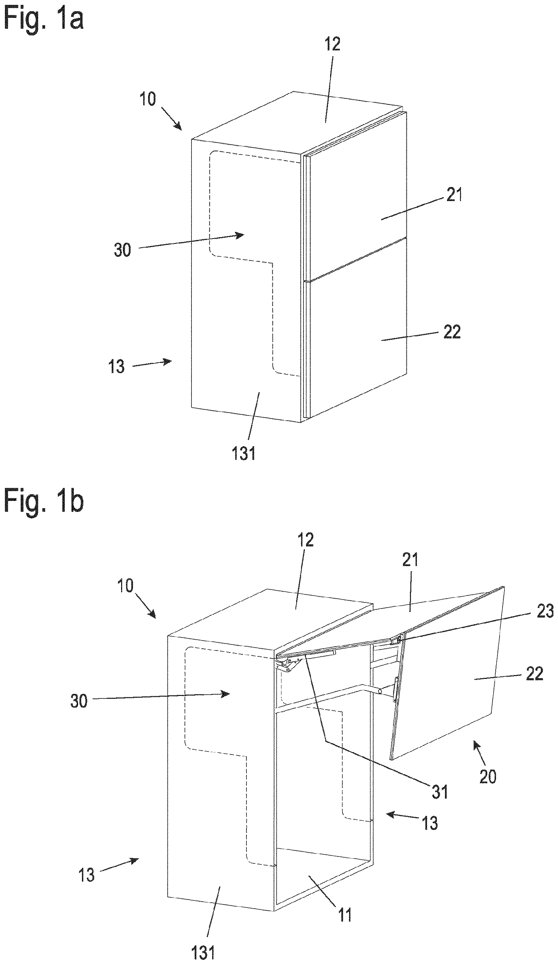

Figur 1a zeigt in einer isometrischen Darstellung einen Oberschrank, bspw. einer Küche, als ein erstes Ausführungsbeispiel eines Möbels mit einem Möbelkorpus 10 und einer Klappenanordnung 20 mit geschlossener Stellung der Klappenanordnung 20. In Figur 1b ist in vergleichbarer Darstellung das Möbel mit teilgeöffneter Klappenanordnung 20 wiedergegeben.

In der Beschreibung beziehen sich Begriffe, wie oben, unten, links, rechts ausschließlich auf die in den jeweiligen Figuren gewählte beispielhafte Darstellung. Die Begriffe vorne und hinten sind der Regel auf eine Öffnungsbewegung eines bewegbaren Möbelteils, bspw. der geführten Klappenanordnung 20 in der Figuren 1a und 1b bezogen. Die vordere Seite ist dabei eine dem Benutzer zugewandte Seite. In allen Figuren bezeichnen zudem gleiche Bezugszeichen gleiche oder gleich wirkende Elemente.

Der Möbelkorpus weist einen Unterboden 11 und einen Oberboden 12 sowie zwei Seitenwände 13 auf. Eine Rückwand ist bevorzugt u. a. aus Stabilitätsgründen vorhanden, in diesem Ausführungsbeispiel aber nicht dargestellt. Der Möbelkorpus 10 ist nach vorne offen, um Zugang zum Innenraum des Schrankes zu erhalten. Die Klappenanordnung 20 ist vorliegend zweiteilig ausgebildet, wobei beide Teile der Klappenanordnung 20 Glaselemente 21, 22 sind. Beide Teile der Klappenanordnung 20 werden auf jeder Seite des Möbelkorpus 10 von jeweils einem Möbelbeschlag 30 geführt. Jeder Möbelbeschlag 30 weist ein Hebelwerk 31 auf, das mit den beiden Glaselementen 21, 22 verbunden ist. Zudem ist ein Scharnier 23 zwischen den Glaselementen 21 und 22 angeordnet. Es wird darauf hingewiesen, dass die Verwendung einer zweiteiligen Klappenanordnung 20 in diesem Ausführungsbeispiel rein beispielhaft ist. Eine anmeldungsgemäße Anordnung aus Möbelbeschlag 30 und damit verbundenen Glaselement 21, 22 kann auch mit nur einem Glaselement, bspw. dem Glaselement 21, umgesetzt sein.

Eine Besonderheit des Möbelkorpus 10 des Beispiels der Figuren 1a und 1b liegt darin, dass die beiden Möbelbeschläge 30 jeweils in die Seitenwände 13 integriert sind. Dieses resultiert in ebenen und bevorzugt optisch und haptisch homogenen Seitenflächen 131 der Seitenwände 13 - nicht nur zur Außenseite des Möbelkorpus 10 hin, sondern auch zur Innenseite des Möbelkorpus 10. Anders als bei innen auf die Seitenwände aufgeschraubten Beschlägen steht der gesamte Innenraum des Möbelkorpus 10 zur Verfügung. In einem geschlossenen Zustand der Klappenanordnung 20 ist das Hebelwerk 31 in den jeweiligen Möbelbeschlag 30 und damit in die Seitenwand 13 eingetaucht.

Ein derartiger Möbelkorpus 10 eignet sich besonders zur Verwendung mit einer Klappenanordnung 20, die vollflächig oder in zumindest großen Abschnitten transparent ist. Entsprechend weisen die Glaselemente 21, 22 in weiten Bereichen transparente Abschnitte auf, durch die auch bei geschlossener Klappenanordnung 20 in den Innenraum des Möbelkorpus 10 Einblick gewährt wird. Wie nachfolgend noch näher erläutert wird, kann dabei vorgesehen sein, einen Transparenzgrad der Klappenanordnung 20 einstellbar zu gestalten, sodass der Einblick nach Bedarf gewährt werden kann.

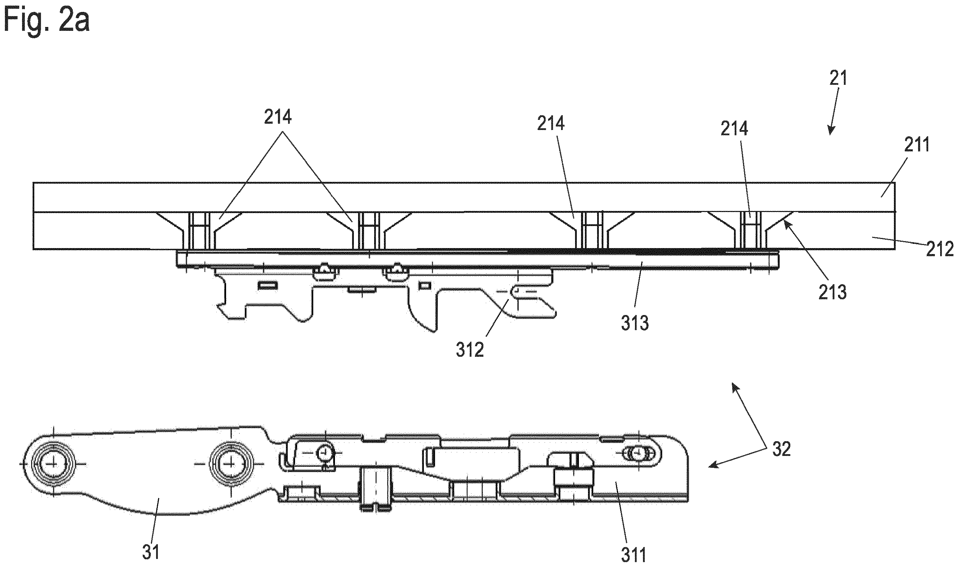

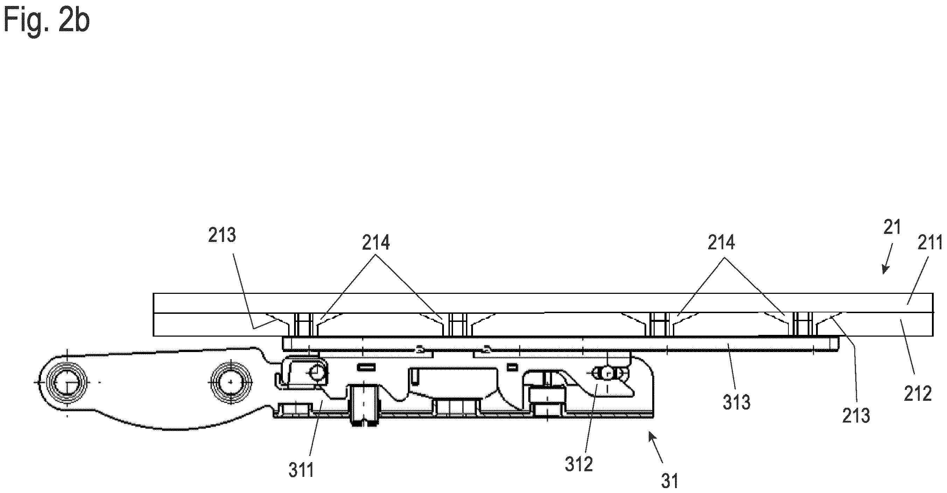

Der Aufbau der Glaselemente 21, 22 ist in den Figuren 2a und 2b detaillierter am Beispiel des Glaselements 21 und seiner Verbindung mittels eines Verbindungsbeschlags 32 mit dem Hebelwerk 31 dargestellt. Dabei ist eine Schnellmontage des Glaselements 21 vorgesehen, indem am Glaselement 21 eine Montageplatte 313 mit einem davon abstehenden Montageprofil 312 montiert ist. Dieses Montageprofil 312 kann in einen Traghebel 311, der ein Glied des Hebelwerks 31 ist, eingehängt und verrastet werden. Auf diese Weise kann die Klappenanordnung 20 leicht vom Hebelwerk 31 des Beschlags 30 abgenommen werden, bspw. beim Aufstellen des Möbels und/ oder zu Reparaturzwecken. Der zusammengesetzte Zustand des Montageprofils 312 mit dem Traghebel 311 ist in der Figur 2b dargestellt.

Die Figuren 2a und 2b zeigen auch den Aufbau des Glaselements 21 und seine Verbindung mit der Montageplatte 313 und damit letztlich den Möbelbeschlag 30.

Das Glaselement 21 ist mehrschichtig aufgebaut und weist ein Deckelement 211 aus Glas sowie ein bevorzugt vollflächig damit verbundenes Tragelement 212 auf. Die beiden Elemente sind bspw. mittels einer in den Figuren 2a, 2b nicht sichtbaren Klebeschicht aufeinander laminiert oder mittels einer Zwischenfolie 220 miteinander verklebt. Das Tragelement 212 kann ebenfalls eine Glasscheibe sein. In alternativen und im Hinblick auf die Bearbeitbarkeit bevorzugten Ausgestaltung ist das Tragelement 212 eine transparente Kunststoffschicht, bspw. eine Polycarbonatschicht oder eine Acrylglasschicht. Das Tragelement 212 ist im gezeigten Beispiel einschichtig, es kann alternativ aber auch mehrschichtig aufgebaut sein. Ein mehrschichtiger Aufbau kann aus dekorativen gründen oder Stabilitätsgründen vorteilhaft sein.

In das Tragelement 212 sind vordem Fügen mit dem Deckelement 211 Aufnahmen 213 eingebracht, in die Befestigungseinsätze 214 eingesetzt sind. Die Befestigungseinsätze 214 sind bspw. Gewindeeinsätze aus einem Metall, bspw. aus Edelstahl, die ein Innengewinde tragen. Die Befestigungseinsätze 214 sind ebenso wie die Aufnahmen 213 abschnittsweise konisch ausgebildet. Dieses ist eine beispielhafte Ausgestaltung. Die Aufnahmen 213 könnten bspw. auch in Form von Stufenbohrungen geformt sein. Sie sind bevorzugt von der Außenseite des Tragelements 212 her betrachtet hinterschnitten, so dass ein eingesetzter Befestigungseinsatz 214 im Hinblick auf eine Zugbelastung formschlüssig mit dem Tragelement 212 verbunden ist. Darüber hinaus kann der Befestigungseinsatz 214 beispielsweise eingeklebt sein. Das Einkleben verhindert ein Verdrehen des Befestigungseinsatzes 214 bspw. beim Einschrauben einer Schraube. Alternativ und/oder zusätzlich kann der Befestigungseinsatz 214 radiale Konturen aufweisen, die sich als Negativ in der Aufnahme 213 wiederfinden und die ein Verdrehen des Befestigungseinsatzes 214 in dem Tragelement 212 verhindern. Zwischen dem Befestigungseinsatz 214 und der Aufnahme 213 kann auch eine elastische Schicht, beispielsweise eine Gummierung, vorgesehen sein, um eine Bruchgefahr des Tragelements 212 zu verringern.

Zur Verbindung des bewegbaren Möbelteils, beispielsweise der Klappenanordnung 20 gemäß den Figuren 1a und 1b, wird die Montageplatte 313 mit Hilfe von in den Figuren 2a, 2b nicht sichtbaren Schrauben in die Befestigungseinsätze 214 verschraubt. Durch Aufsetzen, Einschwenken und Verrasten kann dann das bewegbare Möbelteil mit Hilfe des Montageprofils 312 in den Traghebel 311 eingerastet werden.

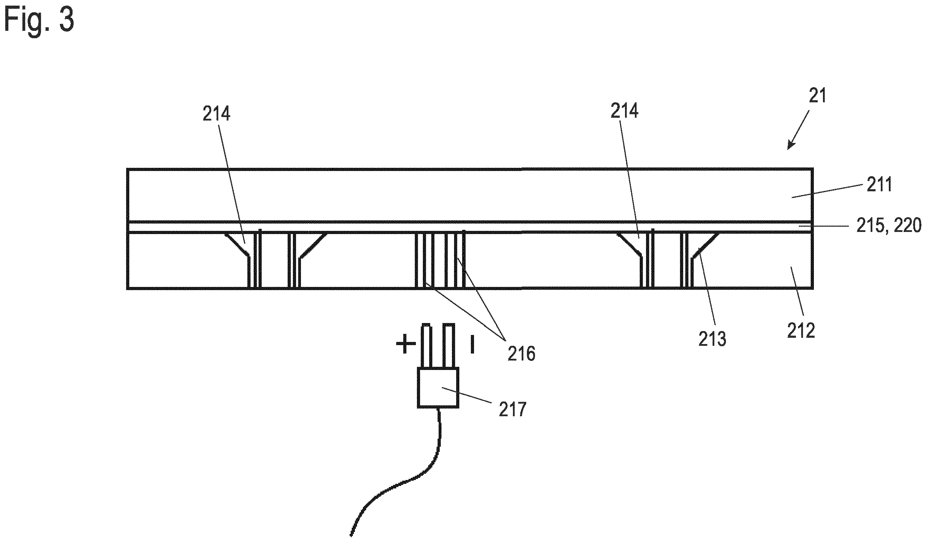

Figur 3 zeigt einen Ausschnitt eines Glaselements 21 in einem weiteren Ausführungsbeispiel. Wiederum sind ein Deckelement 211 aus Glas und ein Tragelement 212 großflächig mittelbar oder unmittelbar miteinander verbunden, wobei in dem Tragelement 212 Befestigungseinsätze 214 angeordnet sind.

Zwischen dem Deckelement 211 und dem Tragelement 212 ist eine Abdeckschicht 215 vorgesehen, die in einem Ausführungsbeispiel abschnittweise nicht-transparent und abschnittsweise transparent ist. Mit nicht-transparenten Abschnitten können beispielsweise die Bereiche, in denen die Befestigungseinsätze 214 angeordnet sind, abgedeckt werden, um diesen Bereichen ein ansprechenderes optisches Erscheinungsbild zu geben. Gegenüber einer außen auf das Deckelement 211 oder dem Tragelement 212 aufgebrachten Schicht hat die zwischen den beiden genannten Schichten angeordnete Abdeckschicht 215 Vorteile in ihrer Beständigkeit. Sie ist vor mechanischen (z.B. Abrieb) und/oder chemischen (beispielsweise umweltbedingten) Einflüssen geschützt. Die nicht-transparenten Abschnitte können auch durch eine Lackierung auf dem Deckelement 211 hergestellt werden, wobei sich die Lackierung im Verbund zwischen dem Deckelement 211 und dem Tragelement 212 befindet. Die Abdeckschicht 215 kann dann auch als eine Zwischenfolie 220 ausgeführt sein.

Bei dem Ausführungsbeispiel der Figur 3 ist zusätzlich vollflächig und/oder in Abschnitten die Abdeckschicht 215 als eine elektrooptisch aktive Schicht ausgebildet. Eine elektrooptisch aktive Schicht ist eine solche, die durch Anlegen von Spannungen an Elektroden, die sich jeweils an den Grenzschichten zwischen dem Deckelement 211 und der Abdeckschicht 215 bzw. der Abdeckschicht 215 und dem Tragelement 212 befinden, in ihrem Transparenzgrad verändert werden.

Die Elektroden können dabei beispielsweise aus dünnen aufgedampften elektrisch leitfähigen aber lichtdurchlässigen Schichten (TCO - transparent conductive oxide), zum Beispiel aus Indiumzinnoxid gebildet sein. Die elektrooptische Schicht selbst kann beispielsweise Flüssigkristalle (LC - liquid crystal) aufweisen und damit den Transparenzgrad verändern. Neben den genannten Flüssigkristallschichten können auch elektrochrome Schichten, bei denen das Anlegen eines Feldes zu einer Färbung führt, verwendet werden. Solche Schichten enthalten beispielsweise Wolframtrioxid oder Polyanilin.

Um das elektrische Feld anlegen zu können, sind die Elektrodenschichten über Zuleitungen 216 mit einem Steckverbinder 217 gekoppelt, über den Spannung angelegt werden kann, um den Transparenzgrad zu ändern. In alternativen Ausgestaltungen können die Elektrodenschichten auch über Kontaktstifte oder eine Kombination aus Zuleitungen und Kontaktstiften elektrisch kontaktiert werden. Kontaktstifte erlauben beispielsweise eine mechanisch einfache Kontaktierung ohne bewegte Zuleitungen in einem geschlossenen Zustand des bewegbaren Möbelteils.

Die in Figur 3 gezeigte Anordnung ermöglicht es, ganzflächig oder in Abschnitten das Glaselement zwischen einem transparenten und einem nicht-transparenten Zustand hin und her zu schalten. Dabei kann ein Bereich mit elektrooptisch aktiver Schicht neben einem dauerhaft nicht-transparenten oder einem dauerhaft transparenten Bereich vorgesehen sein. Es ist aber auch denkbar, Abschnitte die dauerhaft nicht-transparent sein sollen, durch dauerhaft entsprechend angesteuerte Abschnitte mit elektrooptisch aktiver Schicht auszubilden. So kann beispielsweise auch ein die Befestigungseinsätze 214 abdeckender nicht-transparenter Abschnitt programmgesteuert definiert werden.

Angesteuert wird die elektrooptisch aktive Schicht durch eine hier nicht dargestellte Steuereinrichtung, die im Bereich des Möbelkorpus integriert sein kann. Neben der in Figur 3 dargestellten Zuführung der steuernden Spannung kann auch vorgesehen sein, die Steuerspannung über die Befestigungsschrauben, die in die Befestigungseinsätze 214 eingeschraubt sind und damit über die Beschläge zuzuführen. Auf diese Weise kann eine kabellose und damit nicht sichtbare Zuführung der Steuerspannung erfolgen. Dabei kann die Steuereinrichtung ggf. mitsamt einer diese und die elektrooptisch aktive Schicht versorgende Batterie auch im Beschlag oder in der Seitenwand des Möbelkorpus angeordnet sein. Eine weitere Möglichkeit der Zuleitung stellen die zuvor genannten Kontaktstifte dar.

Durch das gezeigte System ist es möglich, den Inhalt des Möbelkorpus sichtbar zu machen, ohne dass dieser geöffnet werden muss.

Die Steuereinrichtung kann dazu eingerichtet sein, eine entsprechende Anweisung eines Bedieners zu empfangen, um zwischen einem transparenten und einem nicht-transparenten Zustand umzuschalten oder für eine gewisse, gegebenenfalls vorgegebene und einstellbare Zeit auf den transparenten Zustand zu schalten und danach selbsttätig wieder zurückzuschalten. Die Steuereinrichtung verfügt dabei bevorzugt über Schnittstellen, über die die entsprechende Anweisung empfangen werden kann. Dabei kann es sich um Funkschnittstellen gemäß bekannten Funkstandards wie zum Beispiel ZigBee, WLAN, KNX-RF, Bluetooth, EnOcean, Z-Wave, BidCos handeln. Auf diese Weise kann beispielsweise eine Kopplung mit einem Mobilgerät eines Benutzers erfolgen, über das die entsprechende Anweisung ausgegeben wird. Auch eine Anbindung an eine übergeordnete Steuereinrichtung beispielsweise einer intelligenten Haussteuerung (Smart Home) ist möglich.

Eine komfortable Steuermöglichkeit bietet auch eine Sprachsteuerung, die über ein integriertes Mikrofon unmittelbar in die Steuereinrichtung selbst integriert sein kann. Alternativ ist es denkbar, eine übergeordnete Sprachsteuerung, die beispielsweise in dem genannten Smart Home-System eingebunden ist, zur Sprachsteuerung zu verwenden. Die Steuereinrichtung kann dabei zusätzlich einen Lautsprecher enthalten, um ihrerseits Signale und/oder Sprachnachrichten auszugeben, wodurch eine Kommunikation mit dem Benutzer ermöglicht wird. Bevorzugt ist die Steuereinrichtung so eingerichtet, dass einem Glaselement und/oder auch einzelnen Abschnitten eines Glaselements ein eingängiger Name zugewiesen werden kann, über den das entsprechende Glaselement angesprochen werden kann. Der Name kann beispielsweise den in einem Möbelkorpus enthaltenen Gegenstand oder die enthaltenen Gegenstände bezeichnen. Bei einer Sprachsteuerung wäre der Nutzer dann in der Lage, anzufragen, wo z.B. die "Teller" stehen. Daraufhin könnte das Glaselement, dem der Name "Teller" zugewiesen wurde, transparent geschaltet werden, um den Standort anzuzeigen. Alternativ oder über ein anderes Kommando könnten auch alle Glaselemente gleichzeitig transparent geschaltet werden, so dass der Benutzer bei seiner Arbeit in der Küche einen vollständigen Überblick über den Inhalt aller Möbelkorpusse erhält, ohne diese öffnen zu müssen.

Wenn eine Spannungszuführung über Kontaktstifte erfolgt, die nur in bestimmten Öffnungs- bzw. Schließzuständen des bewegbaren Möbelteils kontaktieren, ergibt sich eine Steuerung des Transparenzgrads auch mechanisch gewissermaßen automatisch gekoppelt an den Öffnungszustand.

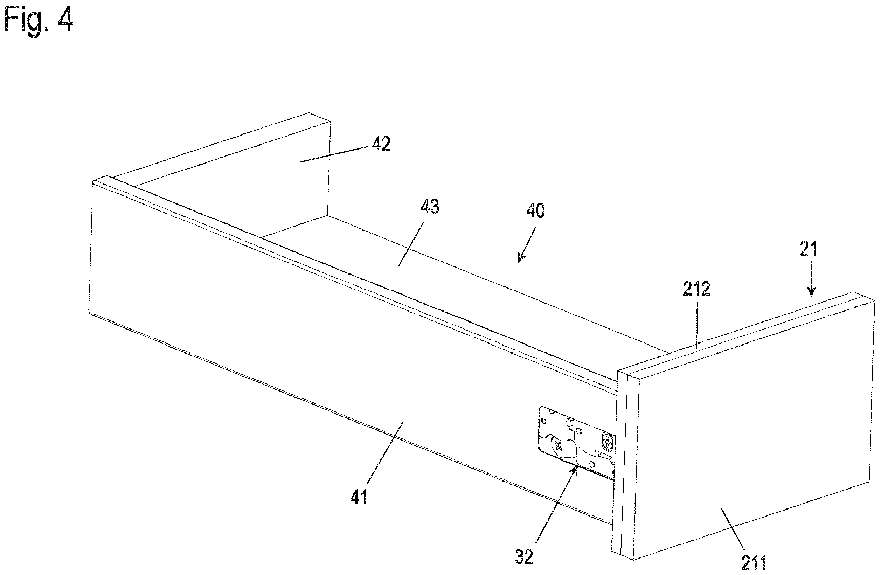

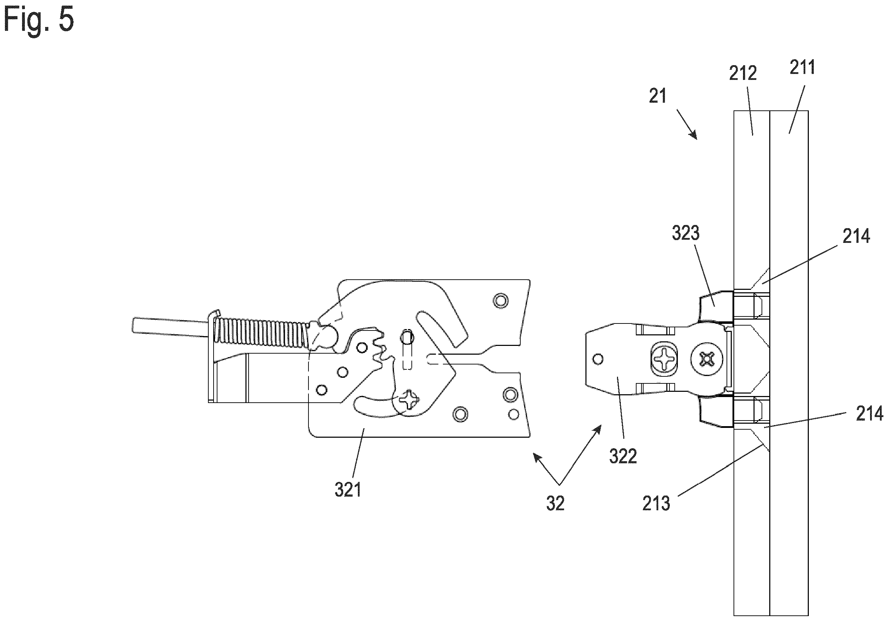

In den Figuren 4 und 5 ist ein Schubkasten 40 als ein weiteres Beispiel eines bewegbaren Möbelteils gezeigt. Über einen Möbelbeschlag, hier einen Verbindungsbeschlag 32 ist an den Schubkasten 40 eine Frontblende festgelegt, die wiederum als ein Glaselement 21 ausgebildet ist.

Die Figur 4 zeigt einen Abschnitt des Schubkastens 40 mit einem Teil des Glaselements 21 in einer isometrischen Darstellung. In der Figur 5 ist die Befestigung des Glaselements 21 an dem Schubkasten 40 über den Verbindungsbeschlag 32 detaillierter gezeigt.

Der Schubkasten 40 weist gemäß Figur 4 eine Seitenzarge 41, eine Rückwand 42 und einen Boden 43 auf. Bei einem vollständigen Schubkasten 40 ist eine zweite Seitenzarge 41 parallel auf der anderen Seite des Schubkastens 40 vorgesehen. In die Seitenzarge 41 ist der Verbindungsbeschlag 32 integriert, der in Figur 5 separat zusammen mit dem Glaselement dargestellt ist.

Der Verbindungsbeschlag 32 umfasst eine Basis 321, die in der Seitenzarge 41 angeordnet ist. Die Basis 321 ist in der Lage, einen Adapter 322 aufzunehmen und festzulegen, die über ein Montageelement 323 mit dem Glaselement 21 verbunden ist. Bei dem dargestellten Beispiel weist die Basis 321 eine verschwenkbare Platte auf, die einen Stift an dem Adapter 322 umgreift und somit den eingesteckten Adapter 322 festhält. Über einen manuell betätigbaren Zugmechanismus kann die schwenkbare Platte gegen eine Federkraft zurückgeschwenkt werden, so dass der Adapter 322 freigegeben wird.

Wie bei dem im Zusammenhang mit den vorherigen Figuren beschriebenen Glaselement 21 ist auch das hier gezeigte Glaselement 21 ein Verbundelement aus einem Deckelement 211 und einem Tragelement 212, wobei in das Tragelement 212 Befestigungseinsätze 214, wiederum beispielsweise Gewindeeinsätze angeordnet sind. In diese Befestigungseinstätze 214 wird mit Hilfe von Schrauben das Montageelement 323, das den Adapter 322 trägt, eingeschraubt.

Das Glaselement 21 kann wie im vorherigen Beispiel beschrieben zwischen dem Deckelement 211 und dem Tragelement 212 eine Abdeckschicht 215 aufweisen, die wiederum ganz oder teilweise eine elektrooptische Schicht sein kann oder umfassen kann.

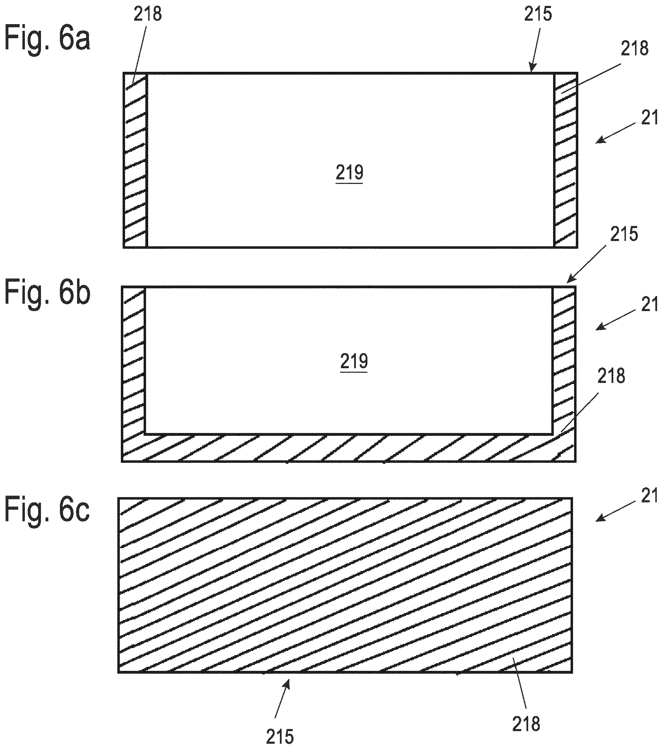

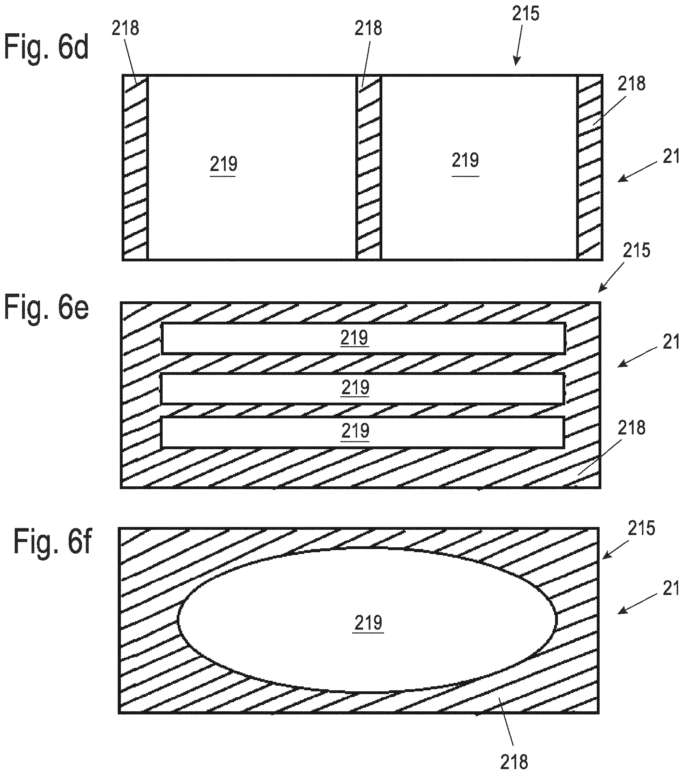

In den Figuren 6a bis 6f sind verschiedene Ausgestaltungen einer Abdeckschicht 215, die für den Einsatz bei einem Schubkasten oder anderen beweglichen Möbelteilen geeignet sind, wiedergegeben. In den verschiedenen Beispielen der Figuren 6a bis 6f sind verschiedene Muster einer Abdeckschicht 215 gezeigt, die fest oder elektrooptisch aktiv schaltbar auf der Abdeckschicht 215 ausgebildet sind. Dabei sind schraffiert nicht-transparente Abschnitte 218 sowie transparente Bereiche 219 ausgebildet. Die nicht-transparenten Abschnitte 218 können beispielsweise dauerhaft den Bereich der Zargen (41, vgl. Figur 4) bzw. des Bodens (43, vgl. Figur 4) eines Schubkastens 40 oder andere Bereiche eines beweglichen Möbelteilen abdecken. Die transparenten Bereiche 219 können dauerhaft bestehen oder mittels einer elektrooptisch aktiven Schicht schaltbar ausgebildet sein und können Einblick in den Inhalt des Schubkastens 40 bzw. eines Möbelkorpus geben.

### Bezugszeichen

- 10: Möbelkorpus
- 11: Unterboden
- 12: Oberboden
- 13: Seitenwand
- 131: Seitenfläche

- 20: Klappenanordnung
- 21, 22: Glaselement
- 211: Deckelement
- 212: Tragelement
- 213: Aufnahme
- 214: Befestigungseinsatz
- 215: Abdeckschicht
- 216: Zuleitung
- 217: Steckverbinder
- 218: nicht-transparenter Abschnitt
- 219: transparenter Abschnitt
- 220: Zwischenfolie
- 23: Scharnier

- 30: Möbelbeschlag (Klappenbeschlag)
- 31: Hebelwerk
- 311: Traghebel
- 312: Montageprofil
- 313: Montageplatte

- 32: Möbelbeschlag (Verbindungsbeschlag)
- 321: Basis
- 322: Adapter
- 323: Montageelement

- 40: Schubkasten
- 41: Seitenzarge
- 42: Rückwand
- 43: Boden

## Patentansprüche

1. Anordnung eines Möbelbeschlags (30, 32) und eines über den Möbelbeschlag (30, 32) geführten und an einem nach vorne offenen Möbelkorpus montierten beweglichen Möbelteils, wobei von dem Möbelbeschlag (30, 32) mittelbar oder unmittelbar ein Glaselement (21, 22) gehalten wird, das Teil des beweglichen Möbelteils ist und ein Verbundglaselement umfasst, das mindestens ein Deckelement (211) aus Glas und ein großflächig mittelbar oder unmittelbar damit verbundenes Tragelement (212) aufweist, wobei an oder in dem Tragelement (212) Befestigungselemente (214) zur Verbindung des Glaselements (21, 22) mit dem Möbelbeschlag (30, 32) angeordnet sind und wobei das Tragelement (212) hinterschnittene Ausnehmungen (213) aufweist, in denen die Befestigungselemente (214) angeordnet sind, **dadurch gekennzeichnet, dass** das Glaselement (21, 22) mindestens eine Abdeckschicht (215) aufweist, die zumindest in dem Bereich der Ausnehmungen (213) des Tragelements (212) nicht-transparent ist und die sich zwischen dem Tragelement (212) und dem Deckelement (211) befindet.

2. Anordnung nach Anspruch 1, bei der das Tragelement (212) aus Glas oder einem transparenten Kunststoff besteht.

3. Anordnung nach Anspruch 1, bei der das Tragelement (212) aus Polycarbonat oder Acrylglas besteht.

4. Anordnung nach einem der Ansprüche 1 bis 3, bei der die Befestigungselemente (214) als Gewindeeinsätze ausgebildet sind.

5. Anordnung nach einem der Ansprüche 1 bis 4, bei der der Möbelbeschlag (30) ein Bewegungsbeschlag ist und das Glaselement (21) eine Frontblende bildet.

6. Anordnung nach Anspruch **5,** bei der der Möbelbeschlag (30) zur Integration in eine Wand eines Möbelkorpus (10) eingerichtet ist.

7. Anordnung nach einem der Ansprüche 1 bis 6, bei der die mindestens eine Abdeckschicht (215) zumindest abschnittsweise durch eine Zwischenfolie (220) oder durch eine Lackierung gebildet ist.

8. Anordnung nach einem der Ansprüche 1 bis 7, bei der die mindestens eine Abdeckschicht (215) vollflächig über die Fläche des Glaselements (21, 22) ausgebildet ist.

9. Anordnung nach einem der Ansprüche 1 bis 7, bei der die mindestens eine Abdeckschicht (215) sich teilweise über die Fläche des Glaselements (21, 22) erstreckt.

10. Anordnung nach einem der Ansprüche 1 bis 9, bei der die mindestens eine Abdeckschicht (215) transparente Bereiche aufweist.

11. Anordnung nach einem der Ansprüche 1 bis 10, bei der die mindestens eine Abdeckschicht (215) zumindest abschnittsweise eine elektrooptisch aktive Schicht aufweist.

12. Anordnung nach Anspruch 11, bei der die elektrooptisch aktive Schicht eine Flüssigkristallschicht umfasst.

13. Anordnung nach Anspruch 11, bei der die elektrooptisch aktive Schicht ein elektrochromes Material umfasst.

14. Anordnung nach einem der Ansprüche 11 bis 13, bei der die elektrooptisch aktive Schicht zwischen zwei Elektrodenschichten angeordnet ist, die über Zuleitungen (216) und/oder Kontaktstifte kontaktierbar sind.

15. Anordnung nach einem der Ansprüche 11 bis 14, aufweisend eine Steuereinrichtung zur Ansteuerung der elektrooptisch aktiven Schicht, wobei die Steuereinrichtung mindestens eine Schnittstelle zum Empfangen von Anweisungen umfasst, die einen Zustand der elektrooptisch aktiven Schicht betreffen.

16. Anordnung nach Anspruch 15, bei der die Schnittstelle eine Funkschnittstelle und/oder eine akustische Schnittstelle ist.

17. Verfahren zum Betreiben einer Anordnung gemäß Anspruch 15 oder 16, bei dem eine Anweisung über die Schnittstelle von der Steuereinrichtung empfangen und ausgewertet wird und bei dem die elektrooptisch aktive Schicht abhängig von der ausgewerteten Anweisung angesteuert wird.

18. Möbel mit einem Möbelkorpus (10) und einer Anordnung gemäß einem der Ansprüche 1 bis 16.

## Claims

1. Arrangement of a furniture fitting (30, 32) and a movable furniture part guided by the furniture fitting (30, 32) and mounted on a furniture carcass open towards the front, wherein a glass element (21, 22) is held indirectly or directly by the furniture fitting (30, 32), which glass element (21, 22) is part of the movable furniture part and comprises a composite glass element which has at least one cover element (211) made of glass and a support element (212) connected directly or indirectly thereto over a large area, wherein fastening elements (214) for connecting the glass element (21, 22) to the furniture fitting (30, 32) are arranged on or in the support element (212), and wherein the support element (212) has undercut recesses (213) in which the fastening elements (214) are arranged, **characterized in that** the glass element (21, 22) has at least one covering layer (215) which is non-transparent at least in the region of the recesses (213) of the support element (212) and which is disposed between the support element (212) and the cover element (211).

2. Arrangement according to claim 1, in which the support element (212) is made of glass or a transparent plastic.

3. Arrangement according to claim 1, in which the support element (212) is made of polycarbonate or acrylic glass.

4. Arrangement according to one of claims 1 to 3, in which the fastening elements (214) are designed as threaded inserts.

5. Arrangement according to one of claims 1 to 4, in which the furniture fitting (30) is a movement fitting and the glass element (21) forms a front panel.

6. Arrangement according to claim 5, in which the furniture fitting (30) is adapted for integration into a wall of a furniture carcass (10).

7. Arrangement according to one of claims 1 to 6, in which the at least one covering layer (215) is formed at least in sections by an intermediate film (220) or by a lacquer coating.

8. Arrangement according to one of claims 1 to 7, in which the at least one covering layer (215) is formed over the entire surface of the glass element (21, 22).

9. Arrangement according to one of claims 1 to 7, in which the at least one covering layer (215) extends partially over the surface of the glass element (21, 22).

10. Arrangement according to one of claims 1 to 9, in which the at least one covering layer (215) comprises transparent regions.

11. Arrangement according to one of claims 1 to 10, in which the at least one covering layer (215) has an electro-optically active layer at least in sections.

12. Arrangement according to claim 11, in which the electro-optically active layer comprises a liquid crystal layer.

13. Arrangement according to claim 11, in which the electro-optically active layer comprises an electrochromic material.

14. Arrangement according to one of claims 11 to 13, in which the electro-optically active layer is arranged between two electrode layers which can be contacted via leads (216) and/or contact pins.

15. Arrangement according to one of claims 11 to 14, comprising a control device for controlling the electro-optically active layer, wherein the control device comprises at least one interface for receiving instructions relating to a state of the electro-optically active layer.

16. Arrangement according to claim 15, in which the interface is a radio interface and/or an acoustic interface.

17. Method for operating an arrangement according to claim 15 or 16, in which an instruction is received and evaluated by the control device via the interface and in which the electro-optically active layer is controlled depending on the evaluated instruction.

18. Item of furniture having a furniture body (10) and an arrangement according to one of claims 1 to 16.

## Revendications

1. Disposition d'une ferrure de meuble (30, 32) et d'une partie de meuble mobile guidée par la ferrure de meuble (30, 32) et montée sur un corps de meuble ouvert sur l'avant, dans laquelle la ferrure de meuble (30, 32) retient directement ou indirectement un élément en verre (21, 22) qui fait partie de la partie de meuble mobile et qui comprend un élément en verre feuilleté comportant au moins un élément de couverture (211) en verre et un élément portant (212) assemblé directement ou indirectement avec celui-ci sur une grande surface, des éléments de fixation (214) étant disposés sur ou dans l'élément portant (212) pour assembler l'élément en verre (21, 22) avec la ferrure de meuble (30, 32) et l'élément portant (212) présentant des évidements (213) en contre-dépouille dans lesquels les éléments de fixation (214) sont disposés, **caractérisée en ce que** l'élément en verre (21, 22) présente au moins une couche de couverture (215) qui n'est pas transparente au moins au niveau des évidements (213) de l'élément portant (212) et qui se trouve entre l'élément portant (212) et l'élément de couverture (211).

2. Disposition selon la revendication 1, dans laquelle l'élément portant (212) est fait de verre ou d'une matière plastique transparente.

3. Disposition selon la revendication 1, dans laquelle l'élément portant (212) est fait de polycarbonate ou de verre acrylique.

4. Disposition selon l'une des revendications 1 à 3, dans laquelle les éléments de fixation (214) sont conformés comme des inserts filetés.

5. Disposition selon l'une des revendications 1 à 4, dans laquelle la ferrure de meuble (30) est une ferrure servant au déplacement et l'élément en verre (21) forme un panneau de façade.

6. Disposition selon la revendication 5, dans laquelle la ferrure de meuble (30) est conçue en vue de son intégration dans une paroi d'un corps de meuble (10).

7. Disposition selon l'une des revendications 1 à 6, dans laquelle l'au moins une couche de couverture (215) est formée au moins en partie par un film intercalaire (220) ou par un vernis.

8. Disposition selon l'une des revendications 1 à 7, dans laquelle l'au moins une couche de couverture (215) est formée sur toute la surface de l'élément en verre (21, 22).

9. Disposition selon l'une des revendications 1 à 7, dans laquelle l'au moins une couche de couverture (215) s'étend sur une partie de la surface de l'élément en verre (21, 22).

10. Disposition selon l'une des revendications 1 à 9, dans laquelle l'au moins une couche de couverture (215) présente des zones transparentes.

11. Disposition selon l'une des revendications 1 à 10, dans laquelle l'au moins une couche de couverture (215) présente au moins en partie une couche ayant une activité électro-optique.

12. Disposition selon la revendication 11, dans laquelle la couche ayant une activité électro-optique comprend une couche de cristaux liquides.

13. Disposition selon la revendication 11, dans laquelle la couche ayant une activité électro-optique comprend un matériau électrochromique.

14. Disposition selon l'une des revendications 11 à 13, dans laquelle la couche ayant une activité électro-optique est disposée entre deux couches d'électrodes qui peuvent être mises en contact par des lignes d'alimentation (216) et/ou des broches de contact.

15. Disposition selon l'une des revendications 11 à 14, présentant une installation de commande pour la commande de la couche ayant une activité électro-optique, dans laquelle l'installation de commande possède au moins une interface pour recevoir des instructions concernant l'état de la couche ayant une activité électro-optique.

16. Disposition selon la revendication 15, dans laquelle l'interface est une interface radio et/ou une interface acoustique.

17. Procédé pour faire fonctionner une disposition selon la revendication 15 ou 16, dans laquelle une instruction est reçue de l'installation de commande sur l'interface et analysée et dans laquelle la couche ayant une activité électro-optique est activée en fonction de l'instruction analysée.

18. Meuble avec un corps de meuble (10) et une disposition selon l'une des revendications 1 à 16.
